# EUROPEAN PATENT SPECIFICATION

(11) **EP 4 647 633 B1**
(45) Date of publication and mention of the grant of the patent: **29.07.2026**
(21) Application number: 25175250.7
(22) Date of filing: 09.05.2025
(51) Int. Cl.: F16H 55/02, F16H 55/08

(54) **WORM**
SCHNECKE
VIS SANS FIN

(30) Priority: 10.05.2024 JP 2024076893
(43) Date of publication of application: 12.11.2025
(73) Proprietor: Mitsuba Corporation, Kiryu-shi, Gunma 376-8555 (JP)
(72) Inventor: JO, Yutaro, Kiryu-shi, Gunma, 3768555 (JP); AOKI, Yuta, Kiryu-shi, Gunma, 3768555 (JP); TAKAHASHI, Hidenori, Kiryu-shi, Gunma, 3768555 (JP); FUKUSHIMA, Yusuke, Kiryu-shi, Gunma, 3768555 (JP)
(74) Representative: Becker Kurig & Partner Patentanwälte mbB

(56) References cited:
- JP-A- 2009 047 267
- JP-B2- 5 873 724
- US-A1- 2007 295 135
- US-A1- 2021 190 191

## Description

### BACKGROUND

### [Technical Field]

The disclosure relates to a worm with which a gear is meshed.

### [Related Art]

For example, Patent Document 1 describes adjusting a length of a worm, a lead angle of teeth, and a chamfer angle provided at both axial ends of the worm to obtain a worm with good rotational balance.

### [Related Art Documents]

### [Patent Documents]

[Patent Document 1] Japanese Patent Application Laid-Open No. 2020-169721 JP 5 873724 B2 discloses a gear device equipped with an enveloping worm and a worm wheel to be meshed with the enveloping worm. The radius of a pitch circle of a tooth formed on the enveloping worm is larger than the radius of a pitch circle of a tooth formed on the worm wheel.

### SUMMARY

### [Technical Problem]

However, in the technique described in Patent Document 1, it is required to determine two adjustment elements including the lead angle of the teeth and the chamfer angle provided at both axial ends of the worm with respect to a specific length of the worm, which complicates the manufacturing process of the worm.

The present invention is provided in the appended claims. The following disclosure serves a better understanding of the present invention. An objective of the invention is to provide a worm capable of obtaining good rotational balance while simplifying the manufacturing process.

### [Solution to Problem]

In an embodiment of the invention, the worm is a worm with which a gear is meshed. The worm includes a main body part, a first tapered part, a second tapered part, a spiral tooth, a first tooth bottom end part, and a second tooth bottom end part. The first tapered part is connected to one axial side of the main body part and has a tapered shape that tapers off from the main body part. The second tapered part is connected to another axial side of the main body part and has a tapered shape that tapers off from the main body part. The spiral tooth is provided in a spiral shape on outer circumferential parts of the first tapered part, the main body part, and the second tapered part, and includes a tooth tip part and a tooth bottom part. The first tooth bottom end part is provided at the first tapered part and forms one end part of the tooth bottom part. The second tooth bottom end part is provided at the second tapered part and forms another end part of the tooth bottom part. The tooth bottom part extends to advance in a spiral shape from the first tooth bottom end part toward one circumferential side of the worm, and a position of the second tooth bottom end part is configured within an angle range of less than 90 degrees on another circumferential side of the worm with respect to a position of the first tooth bottom end part, centered on a rotation center of the worm.

### [Effects]

According to the invention, it is possible to realize a worm capable of obtaining good rotational balance while simplifying the manufacturing process.

### BRIEF DESCRIPTION OF THE DRAWINGS

FIG. 1 is a schematic view of a sunroof device installed at a roof of a vehicle.
FIG. 2 is a perspective view of a sunroof motor as viewed from an output gear side.
FIG. 3 is a perspective view of the sunroof motor as viewed from a cover member side.
FIG. 4 is a cross-sectional view taken along an axial direction of a rotating shaft of the sunroof motor.
FIG. 5 is a perspective view of a rotor as viewed from a worm side.
FIG. 6 is an enlarged perspective view of a portion of the worm of FIG. 5.
FIG. 7 is a view of the rotating shaft alone as viewed from a direction orthogonal to the axial direction.
FIG. 8 is an AR arrow view of FIG. 6.
FIG. 9 is a graph showing a relationship between a position of a cutting end part and a balance amount of the rotating shaft in 30-degree increments.
FIG. 10 is a graph showing a relationship between the position of the cutting end part and the balance amount of the rotating shaft in 5-degree increments.
FIG. 11 is a graph showing a relationship between the position of the cutting end part and the balance amount of the rotating shaft in 1-degree increments.
FIG. 12 is a graph showing a relationship between the position of the cutting end part and a static value.
FIG. 13 is a table (n = 32) showing the balance amount of the rotating shaft in the case where the position of the cutting end part is shifted by 35 degrees in the clockwise direction.
FIG. 14 is a table (n = 30) showing the balance amount of the rotating shaft in the case where the position of the cutting end part is shifted by 38 degrees in the clockwise direction.

### DESCRIPTION OF THE EMBODIMENTS

Hereinafter, an embodiment of the invention will be described in detail with reference to the drawings.

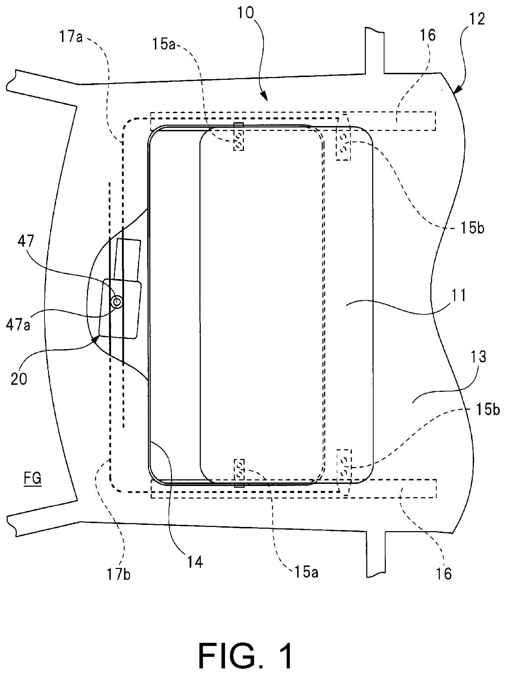

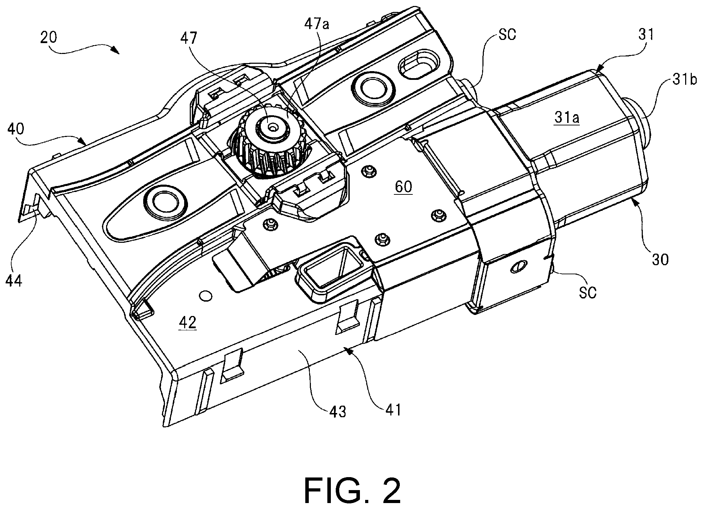

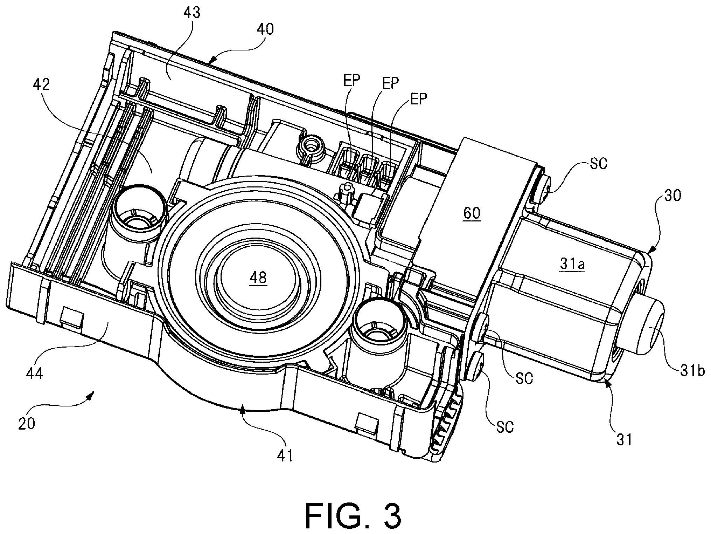

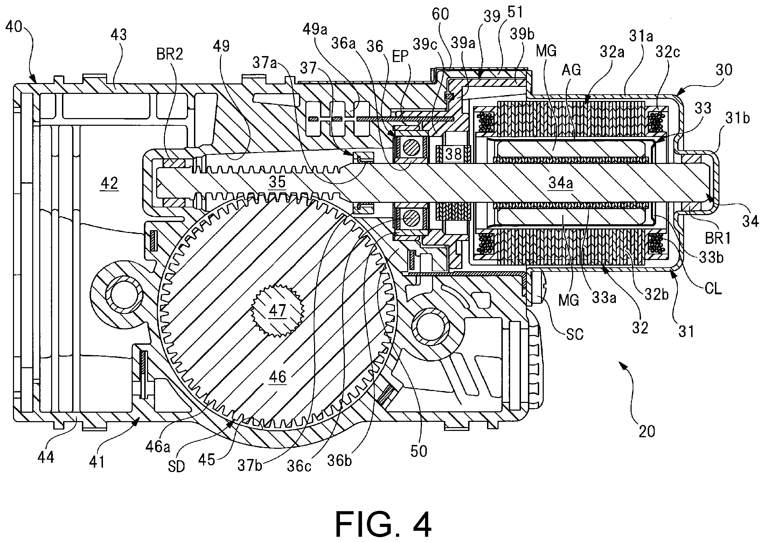

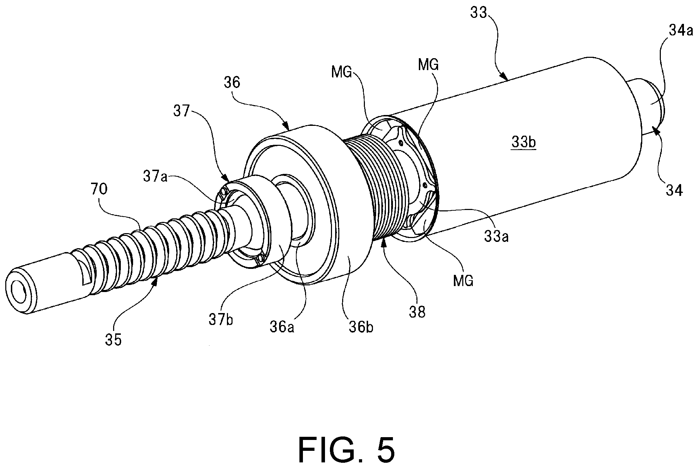

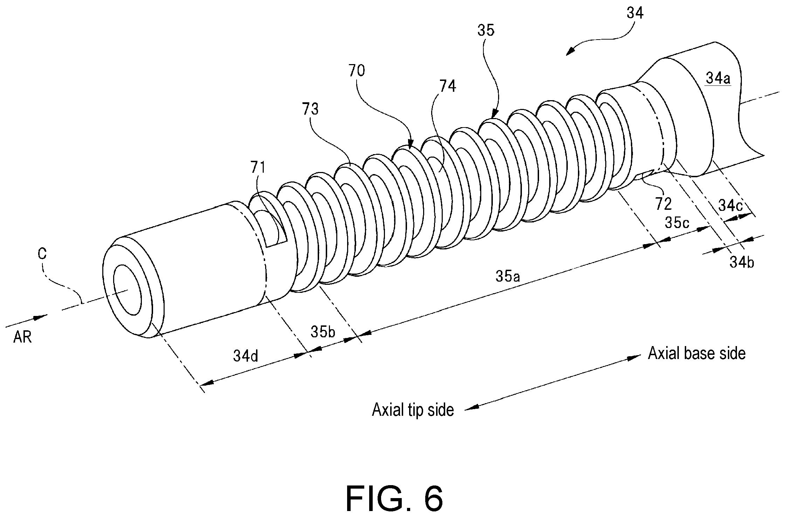

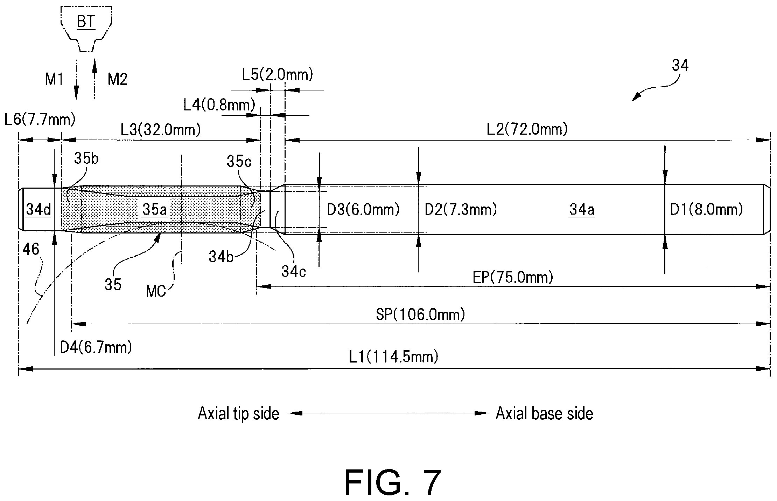

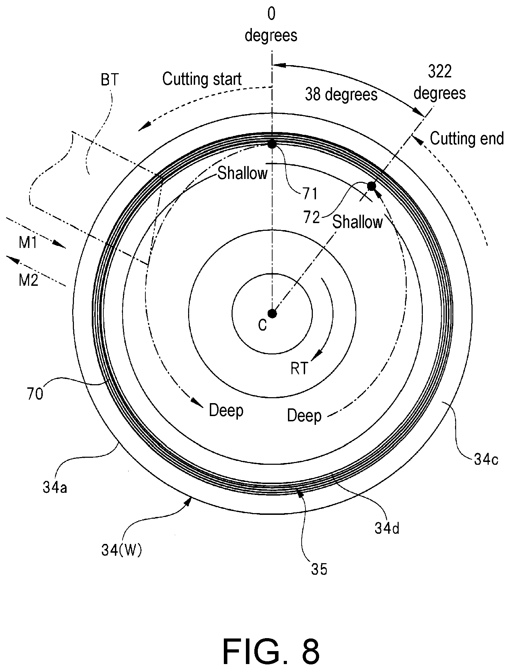

FIG. 1 is a schematic view of a sunroof device installed at a roof of a vehicle. FIG. 2 is a perspective view of a sunroof motor as viewed from an output gear side. FIG. 3 is a perspective view of the sunroof motor as viewed from a cover member side. FIG. 4 is a cross-sectional view taken along an axial direction of a rotating shaft of the sunroof motor. FIG. 5 is a perspective view of a rotor as viewed from a worm side. FIG. 6 is an enlarged perspective view of a portion of the worm of FIG. 5. FIG. 7 is a view of the rotating shaft alone as viewed from a direction orthogonal to the axial direction. FIG. 8 is an AR arrow view of FIG. 6.

### <Sunroof device>

As shown in FIG. 1, a sunroof device 10 includes a roof panel 11. The roof panel 11 opens and closes an opening 14 formed at a roof 13 of a vehicle 12. Pairs of shoes 15a and 15b are fixed respectively on both vehicle-width sides (upper and lower sides in FIG. 1) of the roof panel 11.

In addition, guide rails 16 extending in the front-rear direction (left-right direction in FIG. 1) of the vehicle 12 are fixed respectively on both vehicle-width sides of the opening 14 in the roof 13. Then, the pairs of shoes 15a and 15b are respectively guided by the pair of guide rails 16, and the roof panel 11 moves in the front-rear direction of the vehicle 12.

One-side ends of drive cables 17a and 17b with gears are connected respectively to the pair of shoes 15b disposed on the rear side (right side in FIG. 1) of the vehicle 12. Other-side ends of the drive cables 17a and 17b are routed to the front side (left side in FIG. 1) of the vehicle 12 beyond the opening 14.

In addition, a sunroof motor 20 is installed inside the roof 13 between a front glass FG and the opening 14 in the front-rear direction of the vehicle 12. Then, the other-side ends of the pair of drive cables 17a and 17b are meshed with an output gear 47a provided at the sunroof motor 20.

Accordingly, upon driving of the sunroof motor 20, the pair of drive cables 17a and 17b move in the longitudinal directions thereof in directions opposite to each other. Thus, the roof panel 11 is pushed and pulled by the pair of drive cables 17a and 17b via the pair of shoes 15b to open and close the opening 14.

### <Sunroof motor>

As shown in FIG. 2 to FIG. 4, the sunroof motor 20 includes an electric motor part 30 and a reduction mechanism part 40. The electric motor part 30 and the reduction mechanism part 40 are fixed to each other by a total of three fixing screws SC.

### <Electric motor part>

The electric motor part 30 is a brushless motor and has a motor case 31 formed into a bottomed tubular shape by, for example, performing deep drawing on a steel plate or the like. The motor case 31 forms an outer frame of the electric motor part 30 and includes a sidewall part 31a formed with a substantially regular hexagonal cross-section in a direction orthogonal to the axial direction of a rotating shaft 34 (see FIG. 4). In addition, the side (right side in FIG. 2 to FIG. 4) opposite to the reduction mechanism part 40 side in the axial direction of the sidewall part 31a is closed by a stepped bottom wall part 31b.

### <Stator>

As shown in FIG. 4, a stator 32 is accommodated inside the motor case 31. The stator 32 has a stator core 32a formed by laminating multiple thin steel plates. The stator core 32a includes a total of six teeth 32b (not shown in detail) and is fixed to the inner side of the motor case 31. Coils CL of three phases composed of the U-phase, the V-phase, and the W-phase are wound respectively on a total of six teeth 32b via an insulator 32c.

### <Rotor>

As shown in FIG. 4 and FIG. 5, a rotor 33 is rotatably provided on the radial inner side of the stator 32 via a specific air gap AG. The rotor 33 is configured to rotate with respect to the stator 32 and has a rotor core 33a formed in a substantially tubular shape. The rotor core 33a is formed by laminating multiple thin steel plates, and a total of four magnets MG are mounted on the radial outer side of the rotor core 33a. Specifically, a total of four magnets MG are disposed at equal intervals (90-degree intervals) in the circumferential direction of the rotor core 33a.

In addition, the radial outer side of the magnets MG mounted on the rotor core 33a is covered with a magnet holder 33b formed of a thin stainless steel plate or the like into a substantially tubular shape. The magnet holder 33b has a function of preventing the magnets MG from falling off from the rotor core 33a. Accordingly, even when the rotor 33 rotates at high speed, the magnets MG do not detach from the rotor core 33a due to the centrifugal force at that time.

### <Rotating shaft>

The rotating shaft 34 is fixed to the rotation center of the rotor core 33a by press-fitting. That is, the rotating shaft 34 is provided to be integrally rotatable with the rotor 33. The rotating shaft 34 is made of a round steel bar to ensure a sufficient strength.

A rotating shaft main body 34a is provided on the axial base side (right side in FIG. 4 and FIG. 5) of the rotating shaft 34. The rotating shaft main body 34a is rotatably accommodated inside the motor case 31 and is rotatably supported by a first bearing BR1 mounted at the bottom wall part 31b of the motor case 31.

In addition, a worm 35 is provided on the axial tip side (left side in FIG. 4 and FIG. 5) of the rotating shaft 34. The worm 35 is rotatably accommodated inside a gear case 41 that forms the reduction mechanism part 40. In addition, the axial tip side of the rotating shaft 34 is rotatably supported by a second bearing BR2 mounted at a worm accommodating part 49 of the gear case 41.

In this manner, the rotating shaft 34 is rotatably accommodated inside both the motor case 31 and the gear case 41.

The worm 35 is integrally provided at the rotating shaft 34 and forms a reduction mechanism SD. Thus, the worm 35 is also made of a round steel bar having a sufficient strength. Accordingly, the worm 35 does not bend, and during driving of the sunroof motor 20, the worm 35 is reliably meshed with a worm wheel 46.

### <Ball bearing>

A ball bearing 36 is mounted at the axial central part of the rotating shaft 34, on the worm 35 side in the axial direction of the rotating shaft main body 34a. That is, the ball bearing 36 is disposed between the first bearing BR1 and the second bearing BR2 in the axial direction of the rotating shaft 34, and rotatably supports the axial central part of the rotating shaft 34. In the axial direction of the rotating shaft main body 34a, the rotor core 33a with the magnets MG mounted is disposed between the ball bearing 36 and the first bearing BR1, and the worm 35 is disposed between the ball bearing 36 and the second bearing BR2.

The ball bearing 36 includes an inner race 36a that is formed of a steel material into a substantially tubular shape, and an outer race 36b that is formed of a steel material into a substantially tubular shape similar to the inner race 36a and has a larger diameter than the inner race 36a. In addition, multiple balls 36c are disposed between the inner race 36a and the outer race 36b. The inner race 36a is fixed to the rotating shaft main body 34a by press-fitting and is capable of rotating together with the rotating shaft 34.

### <Sensor magnet unit>

In addition, a sensor magnet unit 37 is disposed between the worm 35 and the ball bearing 36 in the axial direction of the rotating shaft 34. The sensor magnet unit 37 includes a tubular bracket member 37a fixed to the rotating shaft main body 34a by press-fitting, and a sensor magnet 37b held by the bracket member 37a. Herein, the sensor magnet 37b is used to detect the rotation state, specifically, the rotation direction, the rotational speed, etc., of the rotating shaft 34 (rotor 33).

Similar to the inner race 36a of the ball bearing 36, the sensor magnet unit 37 is also capable of rotating together with the rotating shaft 34.

### <Adjustment member>

Furthermore, an adjustment member 38 for adjusting the rotational balance of the rotor 33 is disposed between the ball bearing 36 and the rotor core 33a (magnet MG) in the axial direction of the rotating shaft 34. The adjustment member 38 is formed in a substantially tubular shape by laminating multiple thin steel plates, and is fixed to the rotating shaft main body 34a by press-fitting.

The adjustment member 38 has a function of suppressing rotational runout of the rotor 33 caused by minute misalignment or the like between the rotation center of the rotating shaft 34 and the rotation center of the rotor core 33a, which vary from product to product. Specifically, during assembly of the rotor 33, a balancing work is performed by partially scraping the outer circumference of the adjustment member 38 while rotating the rotor 33. Accordingly, the rotational balance of the rotor 33 is optimized.

Thus, the rotational runout of the rotor 33 is suppressed, the operating sound of the sunroof motor 20 is reduced, and thus quietness is improved. In particular, since the sunroof motor 20 is disposed above the heads of the driver and the passengers, a loud operating sound would be disturbing to the ear. Accordingly, especially in the sunroof motor 20, it is important to further improve quietness.

To further improve quietness, it might be desirable to dispose the adjustment member 38 on both axial sides of the relatively heavy rotor core 33a and magnets MG, and perform a balancing work by partially scraping each adjustment member 38. However, if an adjustment member 38 is additionally provided on the axial base side of the rotating shaft 34, not only would the balancing work require more labor, but increases in the size and the weight of the sunroof motor 20 (electric motor part 30) would be unavoidable. Thus, in the sunroof motor 20 of this embodiment, only one adjustment member 38, which is the minimum quantity as necessary, is provided at the rotor 33.

As in this embodiment, in the case where only one adjustment member 38 is provided, the overall static unbalance of the rotor 33 can be effectively reduced. On the other hand, since balancing is performed on only one side of the rotor core 33a and the magnets MG, the overall dynamic unbalance of the rotor 33 deteriorates, with phases of rotational runout becoming opposite to each other in right rotation and in left rotation.

Thus, to obtain good overall rotational balance (rotational balance as viewed comprehensively) of the rotor 33 while considering each unbalance (static unbalance/dynamic unbalance), it is important to minimize these two types of unbalance for each component unit constituting the rotor 33. Thus, in this embodiment, by devising the shape of a spiral tooth 70 that forms the worm 35, the unbalance of the worm 35 (rotating shaft 34) alone is reduced. The detailed shape of the spiral tooth 70 (worm 35) will be described later in detail.

### <Holder member>

The electric motor part 30 includes a holder member 39. The holder member 39 is formed of a resin material such as plastic into a specific shape. The holder member 39 has a support main body 39a formed in a substantially flat plate shape, and a wall part 39b that enters into the gear case 41. That is, the holder member 39 is a component that is mounted to the gear case 41.

An annular support part 39c is integrally provided at the support main body 39a of the holder member 39. The annular support part 39c supports the outer race 36b of the ball bearing 36 from the electric motor part 30 side (right side in FIG. 4) in the axial direction of the outer race 36b. The worm accommodating part 49 side (left side in FIG. 4) of the outer race 36b in the axial direction is supported by a bearing mounting part 50 provided at the gear case 41.

In this manner, the outer race 36b of the ball bearing 36 is held between the gear case 41 and the holder member 39 in the axial direction of the rotating shaft 34. The holder member 39 is fixed without rattling inside the gear case 41 by fixing the motor case 31 to the gear case 41 with a total of three fixing screws SC.

In addition, multiple conductive members EP are mounted to the support main body 39a corresponding to the coils CL of three phases. Specifically, a total of three conductive members EP (see FIG. 3) are provided corresponding to the U-phase, the V-phase, and the W-phase. In this manner, the holder member 39 holds a total of three conductive members EP. The conductive member EP is formed of brass or the like with excellent conductivity into a substantially rod shape, and as shown in FIG. 4, extends in the axial direction of the rotating shaft 34.

Herein, the electric motor part 30 sides (right side in FIG. 4) in the longitudinal direction of the conductive members EP are electrically connected to the coils CL of three phases. On the other hand, the opposite sides (left side in FIG. 4) to the electric motor part 30 sides in the longitudinal direction of the conductive members EP are supported by a conductive member support part 49a provided at the gear case 41. A control board (not shown) to which an external connector (not shown) on the vehicle 12 (see FIG. 1) side is connected is electrically connected to the portion of the conductive member EP supported by the conductive member support part 49a.

Accordingly, a driving current is supplied from an on-vehicle controller or the like to each coil CL, and thus the rotating shaft 34 is rotated in the right rotation (forward rotation) or left rotation (reverse rotation). In this manner, the holder member 39 supports the outer race 36b of the ball bearing 36 and holds a total of three conductive members EP.

### <Reduction mechanism part>

As shown in FIG. 2 to FIG. 4, the reduction mechanism part 40 includes a gear case 41 that accommodates the reduction mechanism SD. The gear case 41 is formed of a resin material such as plastic into a substantially flat rectangular parallelepiped shape, and is abutted against the motor case 31 in the axial direction of the rotating shaft 34. Specifically, the gear case 41 has a first wall part 42, a second wall part 43, and a third wall part 44.

A worm wheel accommodating part 45 is provided on the inner side of the gear case 41. The worm wheel accommodating part 45 is disposed near the third wall part 44. A worm wheel 46 that forms the reduction mechanism SD is rotatably accommodated inside the worm wheel accommodating part 45. The worm wheel 46 is composed of a resin material such as plastic to achieve weight reduction.

The worm wheel 46 is provided with a tooth part 46a, and the tooth part 46a is meshed with the worm 35 inside the gear case 41. The reduction mechanism SD is formed by the worm 35 and the worm wheel 46. The worm wheel 46 is a spur gear and corresponds to a gear in the disclosure.

In this manner, the reduction mechanism SD is a worm reducer with which a relatively large reduction ratio is obtained. Specifically, in this embodiment, the reduction ratio of the reduction mechanism SD is [1/67]. That is, the reduction ratio is such that upon 67 rotations of the worm 35, the worm wheel 46 finally completes one rotation. Of course, the reduction ratio may also be set to another reduction ratio.

In addition, the axial base side of an output shaft 47 composed of a round steel bar is fixed to the rotation center of the worm wheel 46. On the other hand, an output gear 47a (see FIG. 2) that meshes with the pair of drive cables 17a and 17b (see FIG. 1) is integrally provided on the axial tip side of the output shaft 47.

Accordingly, the high-speed rotation of the rotating shaft 34 is decelerated by the reduction mechanism SD, and the rotation force that has been decelerated and converted into a high torque is transmitted to the pair of drive cables 17a and 17b via the output shaft 47 and the output gear 47a.

Herein, the worm wheel accommodating part 45 is opened (not shown) on the side opposite to the first wall part 42 side, and the opening of the worm wheel accommodating part 45 is closed by a cover member 48 formed into a substantially disc shape by press-working a steel plate or the like, as shown in FIG. 3.

In addition, as shown in FIG. 4, a worm accommodating part 49 is provided on the inner side of the gear case 41. The worm accommodating part 49 is disposed near the second wall part 43. The worm accommodating part 49 is arranged alongside the worm wheel accommodating part 45, and the inside of the worm accommodating part 49 and the inside of the worm wheel accommodating part 45 are in communication with each other. Thus, the worm 35 and the tooth part 46a are meshed with each other inside the gear case 41.

The worm accommodating part 49 extends in the axial direction of the rotating shaft 34, and a second bearing BR2 that supports the axial tip side (left side in FIG. 4) of the rotating shaft 34 rotatably is accommodated on the bottom side (left side in FIG. 4) of the worm accommodating part 49.

Furthermore, a conductive member support part 49a is disposed between the worm accommodating part 49 and the second wall part 43. The conductive member support part 49a has a function of supporting, without rattling, the side (left side in FIG. 4) opposite to the electric motor part 30 side in the longitudinal direction of the conductive member EP held by the holder member 39. Accordingly, it is possible to electrically connect the control board (not shown) stably to each conductive member EP.

In addition, a bearing mounting part 50 is provided on the inner side of the gear case 41. The bearing mounting part 50 is disposed on the electric motor part 30 side (right side in FIG. 4) in the axial direction of the worm accommodating part 49, and is opened toward the motor case 31. The ball bearing 36 is accommodated inside the bearing mounting part 50, and the bearing mounting part 50 supports the side (left side in FIG. 4) opposite to the electric motor part 30 side in the axial direction of the outer race 36b.

In this manner, the rotating shaft 34 is supported at three points including the first bearing BR1, the second bearing BR2, and the ball bearing 36. Accordingly, during operation of the sunroof motor 20, the worm 35 is prevented from separating from the tooth part 46a of the worm wheel 46 (disengaging from each other), and reliable power transmission to each other becomes possible.

The inner race 36a is fixed to the rotating shaft main body 34a of the rotating shaft 34, and the outer race 36b is held between the bearing mounting part 50 and the holder member 39. Thus, the rotating shaft 34 does not move in the axial direction thereof. Accordingly, it is not required to dispose thrust bearings on both axial sides of the rotating shaft 34, and reduction in the number of components is achieved.

### <Motor accommodating part>

As shown in FIG. 4, a motor accommodating part 51 formed in a substantially box shape is provided on the inner side of the gear case 41. The motor accommodating part 51 is disposed on the motor case 31 side (right side in FIG. 4) of the bearing mounting part 50 in the axial direction of the rotating shaft 34. A part of the electric motor part 30 is accommodated in the motor accommodating part 51. Specifically, the wall part 39b of the holder member 39 that forms the electric motor part 30 enters into the motor accommodating part 51.

### <Metal jacket>

As shown in FIG. 2 and FIG. 3, a metal jacket 60 formed by bending a thin steel plate is partially mounted on the outer side of the gear case 41. The metal jacket 60 has a function of preventing electrical noise generated inside the gear case 41 from radiating to outside of the gear case 41. Accordingly, the electrical noise does not reach car audio equipment and the like (not shown) mounted in the vehicle 12 (see FIG. 1), and generation of radio noise and the like is suppressed.

### <Detailed structure of rotating shaft>

Next, the detailed structure of the rotating shaft 34 will be described in detail with reference to the drawings.

As shown in FIG. 6 and FIG. 7, the rotating shaft 34 includes a rotating shaft main body 34a and a worm 35, and the length dimension along the axial direction of the rotating shaft 34 is L1 (114.5 mm). In addition, the length dimension along the axial direction of the rotating shaft main body 34a is L2 (72.0 mm), which is shorter than the overall length dimension L1 of the rotating shaft 34 (L2 < L1). In addition, the length dimension along the axial direction of the worm 35 is L3 (32.0 mm), which is shorter than the length dimension L2 of the rotating shaft main body 34a (L3 < L2).

Furthermore, the outer diameter dimension of the rotating shaft main body 34a is D1 (8.0 mm), and the outer diameter dimension of the worm 35 is D2 (7.3 mm), which is smaller than the outer diameter dimension D1 of the rotating shaft main body 34a (D2 < D1).

The rotating shaft main body 34a is disposed on the axial base side of the rotating shaft 34, and the worm 35 is disposed on the axial tip side of the rotating shaft 34. Herein, in FIG. 7, the worm 35 is shown with hatching to make it easier to recognize the worm 35. In addition, in FIG. 7, detailed illustration (see FIG. 6) of the spiral tooth 70 forming the worm 35 is omitted.

The rotating shaft main body 34a is not formed with any component on the outer circumferential part thereof, and has a simple cylindrical shape that extends straight in the axial direction. Thus, the rotational balance of the rotating shaft main body 34a itself is good, and rotational runout almost does not occur. In other words, the rotational balance of the rotating shaft main body 34a does not require adjustment.

In addition, a small-diameter cylindrical part 34b and a tapered connection part 34c are provided between the rotating shaft main body 34a and the worm 35 in the axial direction of the rotating shaft 34. Specifically, in the axial direction of the rotating shaft 34, the small-diameter cylindrical part 34b is disposed at a portion closer to the worm 35, and the tapered connection part 34c is disposed at a portion closer to the rotating shaft main body 34a.

The outer diameter dimension of the small-diameter cylindrical part 34b is D3 (6.0 mm), which is smaller than the outer diameter dimension D1 of the rotating shaft main body 34a and the outer diameter dimension D2 of the worm 35 (D3 < D2 < D1). In addition, the axial length of the small-diameter cylindrical part 34b is L4 (0.8 mm).

The tapered connection part 34c has a substantially truncated cone shape, and the outer diameter of the tapered connection part 34c gradually changes to smoothly connect the rotating shaft main body 34a and the small-diameter cylindrical part 34b. That is, the outer diameter dimension of the portion of the tapered connection part 34c closer to the rotating shaft main body 34a is D1, and the outer diameter dimension of the portion of the tapered connection part 34c closer to the small-diameter cylindrical part 34b is D3. In addition, the axial length of the tapered connection part 34c is L5 (2.0 mm).

Herein, similarly, the small-diameter cylindrical part 34b and the tapered connection part 34c are not formed with any component on the outer circumferential parts thereof, and are formed in a simple cylindrical shape and a simple truncated cone shape, respectively. Thus, the rotational balance is also good in both the small-diameter cylindrical part 34b and the tapered connection part 34c, and rotational runout almost does not occur. That is, similar to the rotating shaft main body 34a, the rotational balance of the small-diameter cylindrical part 34b and the tapered connection part 34c does not require adjustment.

By providing the small-diameter cylindrical part 34b and the tapered connection part 34c between the worm 35 and the rotating shaft main body 34a, a lathe tool BT (see FIG. 7) used during formation of the spiral tooth 70 is prevented from contacting the rotating shaft main body 34a. In other words, the small-diameter cylindrical part 34b and the tapered connection part 34c function as a "relief" for the lathe tool BT.

Furthermore, a bearing support part 34d is provided on the axial tip side of the worm 35. Similar to the rotating shaft main body 34a, the bearing support part 34d is not formed with any component on the outer circumferential part thereof, and has a simple cylindrical shape. Thus, the rotational balance is also good in the bearing support part 34d, and rotational runout almost does not occur. Accordingly, similarly, the rotational balance of the bearing support part 34d does not require adjustment.

Herein, the bearing support part 34d is a portion that is rotatably supported by the second bearing BR2 (see FIG. 4), and the axial length thereof is L6 (7.7 mm), which is longer than the axial length L4 of the small-diameter cylindrical part 34b and the axial length L5 of the tapered connection part 34c (L6 > L5 > L4). In addition, the outer diameter dimension of the bearing support part 34d is D4 (6.7 mm), which is larger than the outer diameter dimension D3 of the small-diameter cylindrical part 34b (D4 > D3).

### <Worm>

The worm 35 is integrally provided at the portion closer to the axial tip side of the rotating shaft 34. A spiral tooth 70 (see FIG. 6) is provided on the outer circumferential part of the worm 35. The spiral tooth 70 is formed by rotating a round steel bar (workpiece) serving as the rotating shaft 34 while abutting the lathe tool BT (see FIG. 7) from the radial outer side thereof to cut the outer circumferential part of the workpiece into a spiral shape. In this manner, the spiral tooth 70 is formed by a lathe and extends in a spiral shape in the axial direction of the workpiece. Thus, the worm 35 (spiral tooth 70) is a machined product.

Herein, the number of threads of the spiral tooth 70 is "1". In this embodiment, since the reduction ratio of the reduction mechanism SD (see FIG. 4) is [1/67] as described above, the number of teeth (tooth count) of the tooth part 46a of the worm wheel 46 meshed with the worm 35 is "67".

In addition, the worm 35 includes a main body part 35a having a meshing center MC at which the tooth part 46a (see FIG. 4) of the worm wheel 46 is meshed. As shown in FIG. 6 and FIG. 7, the main body part 35a is disposed at the axial central part of the worm 35. Furthermore, the worm 35 includes a first tapered part 35b connected to the axial tip side (one axial side) of the main body part 35a, and a second tapered part 35c connected to the axial base side (other axial side) of the main body part 35a.

Specifically, in the axial direction of the worm 35, the first tapered part 35b has a tapered shape that gradually becomes smaller in diameter as it extends away from the main body part 35a. In addition, in the axial direction of the worm 35, the second tapered part 35c also has a tapered shape that gradually becomes smaller in diameter as it extends away from the main body part 35a.

The axial tip side of the first tapered part 35b is connected to the bearing support part 34d, and the axial base side of the second tapered part 35c is connected to the small-diameter cylindrical part 34b. That is, the bearing support part 34d having a smaller diameter than the main body part 35a is provided on the side opposite to the main body part 35a side of the first tapered part 35b in the axial direction of the worm 35, and the small-diameter cylindrical part 34b having a smaller diameter than the main body part 35a is provided on the side opposite to the main body part 35a side of the second tapered part 35c in the axial direction of the worm 35.

The bearing support part 34d corresponds to a first small-diameter part in the disclosure. In addition, the small-diameter cylindrical part 34b corresponds to a second small-diameter part in the disclosure.

### <Spiral tooth>

As shown in FIG. 6, the spiral tooth 70 extends in a spiral shape in the axial direction of the worm 35, and is formed by performing a cutting processing using a lathe from the axial tip side toward the axial base side of the worm 35. Specifically, the spiral tooth 70 is provided in a spiral shape on the outer circumferential parts of the first tapered part 35b, the main body part 35a, and the second tapered part 35c of the worm 35.

Herein, a cutting start part 71 serving as a starting position (starting point) of the cutting processing is provided on the longitudinal tip side (left side in FIG. 6) of the spiral tooth 70. The cutting start part 71 serves as an introduction part for the lathe tool BT (see FIG. 7). On the other hand, a cutting end part 72 serving as an ending position (ending point) of the cutting processing is provided on the longitudinal base side (right side in FIG. 6) of the spiral tooth 70. The cutting end part 72 serves as a discharge part for the lathe tool BT (see FIG. 7).

Specifically, the cutting start part 71 is disposed at the first tapered part 35b that forms the worm 35, and the cutting end part 72 is disposed at the second tapered part 35c that forms the worm 35. Herein, the first tapered part 35b and the second tapered part 35c are so-called incomplete parts that do not function as a gear, and by providing the cutting start part 71 at the first tapered part 35b and providing the cutting end part 72 at the second tapered part 35c, the transmission efficiency of the reduction mechanism SD is enhanced while enabling smooth operation of the reduction mechanism SD.

In other words, in this embodiment, the adjustment of the rotational balance of the worm 35 to be described later is performed using the first tapered part 35b and the second tapered part 35c, which are incomplete parts of the worm 35. That is, in this embodiment, the incomplete parts of the worm 35 are effectively used.

In addition, a tooth tip part 73 is provided on the outer circumferential part of the spiral tooth 70. Furthermore, a tooth bottom part 74 is provided at the portion that is cut by the lathe tool BT of the lathe and recessed toward the radial inner side. That is, the spiral tooth 70 includes the tooth tip part 73 and the tooth bottom part 74. The cutting start part 71 forms the longitudinal tip part (one end part) of the tooth bottom part 74, and the cutting end part 72 forms the longitudinal base part (other end part) of the tooth bottom part 74.

The cutting start part 71 corresponds to a first tooth bottom end part in the disclosure. In addition, the cutting end part 72 corresponds to a second tooth bottom end part in the disclosure.

In this manner, the spiral tooth 70 is formed by alternately arranging the tooth tip part 73 and the tooth bottom part 74 in the axial direction of the worm 35. In the spiral tooth 70 of this embodiment, the pressure angle is set to "11.0 degrees", the module is set to "0.700", and the pitch is set to "2.199 mm".

Since the spiral tooth 70 provided at the worm 35 continues in a spiral shape in the axial direction of the worm 35, between one portion and another portion in the axial direction of the worm 35, the position of center of gravity of a cross-section in a direction orthogonal to the axial direction of the worm 35 and the position of the rotation center of the worm 35 respectively shift in different directions. Thus, compared to the rotating shaft main body 34a, the small-diameter cylindrical part 34b, the tapered connection part 34c, and the bearing support part 34d, which are not formed with any component on the outer circumferential parts, the rotational balance of the worm 35 can be said to be poor.

The poor rotational balance of the worm 35 as described above induces rotational runout of the rotating shaft 34 at which the worm 35 is integrally provided. Thus, a load is applied to the electric motor part 30 (see FIG. 4), and the operating sound of the sunroof motor 20 increases. Accordingly, in this embodiment, similar to other portions of the rotating shaft 34, the rotational balance is also configured to a state as good as possible in the portion of the worm 35.

In this embodiment, to obtain good rotational balance of the worm 35, as shown in FIG. 8, when viewing the worm 35 from the axial direction, the position of the cutting end part 72 serving as the ending point is adjusted with respect to the position of the cutting start part 71 serving as the starting point in the circumferential direction of the worm 35. That is, in this embodiment, by shifting the position of the cutting end part 72 with respect to the position of the cutting start part 71 by a specific angle in the circumferential direction of the worm 35, the overall rotational runout of the worm 35 is suppressed. Accordingly, the rotational balance of the worm 35 alone and thus the overall rotational balance of the rotating shaft 34 become good.

Specifically, in the rotating shaft 34 of the configuration shown in FIG. 7, as shown in FIG. 8, the tooth bottom part 74 forming the spiral tooth 70 advances in a spiral shape from the cutting start part 71 (starting point) toward one circumferential side (counterclockwise direction) of the worm 35. The position of the cutting end part 72 (ending point) is configured within an angle range of less than 90 degrees in the other circumferential side (clockwise direction) of the worm 35, specifically at a position of 38 degrees, with respect to the position of the cutting start part 71 (0 degrees), centered on the rotation center of the worm 35 (equal to the rotation center C of the rotating shaft 34).

That is, the cutting end part 72 is offset at an acute angle in the clockwise direction of the worm 35 with respect to the cutting start part 71. It has been found that by configuring the spiral tooth 70 with such a shape, the overall rotational balance of the rotating shaft 34 becomes best (the balance amount [g•mm] of the rotating shaft 34 becomes optimal).

### <Regarding processing procedure of spiral tooth and position of cutting end part>

The optimal value of the angle (acute angle side in the clockwise direction in FIG. 8) formed by the position (starting point) of the cutting start part 71 and the position (ending point) of the cutting end part 72 has been examined by preparing multiple samples (trial products). The following describes these examination results in detail.

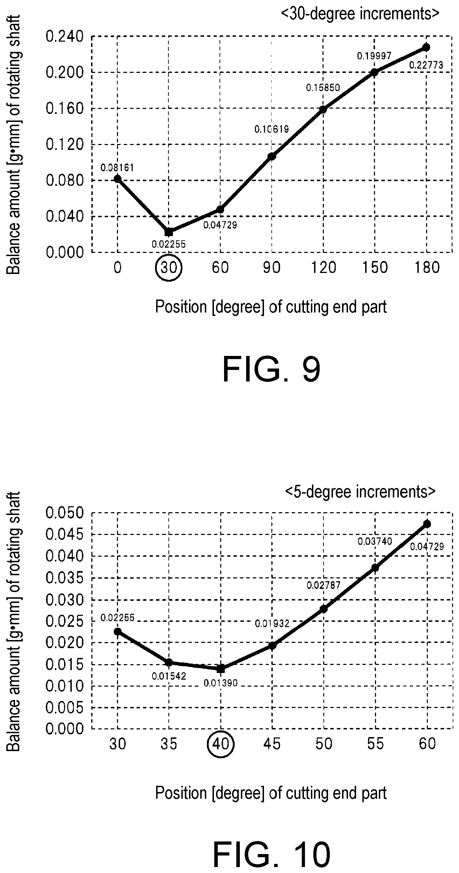

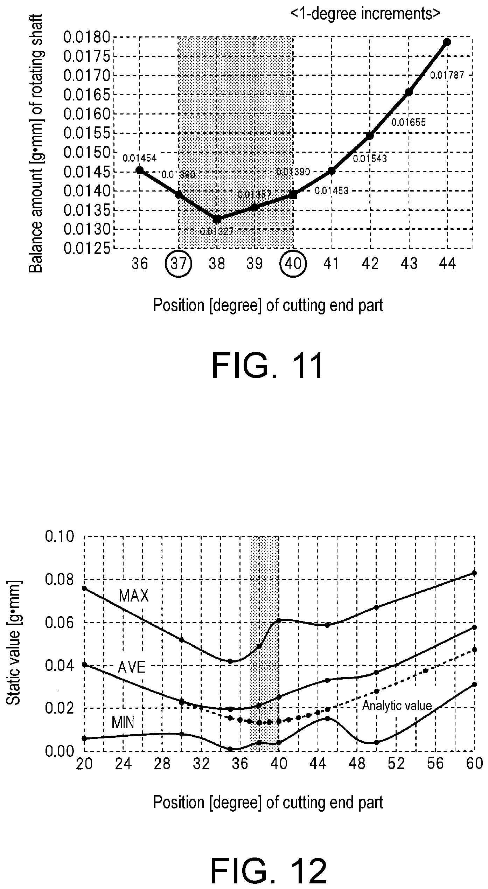

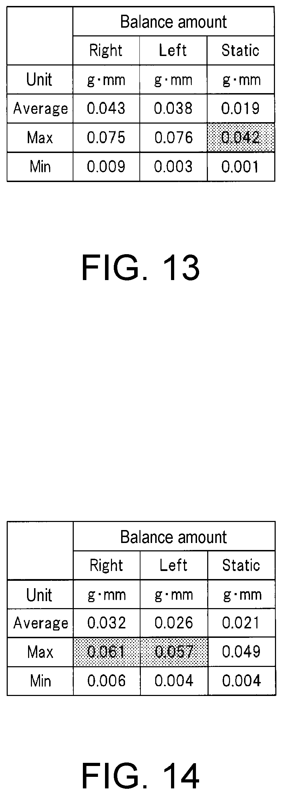

FIG. 9 is a graph showing a relationship between the position of the cutting end part and the balance amount of the rotating shaft in 30-degree increments. FIG. 10 is a graph showing a relationship between the position of the cutting end part and the balance amount of the rotating shaft in 5-degree increments. FIG. 11 is a graph showing a relationship between the position of the cutting end part and the balance amount of the rotating shaft in 1-degree increments. FIG. 12 is a graph showing a relationship between the position of the cutting end part and the static value. FIG. 13 is a table (n = 32) showing the balance amount of the rotating shaft in the case where the position of the cutting end part is shifted by 35 degrees in the clockwise direction. FIG. 14 is a table (n = 30) showing the balance amount of the rotating shaft in the case where the position of the cutting end part is shifted by 38 degrees in the clockwise direction.

Herein, prior to describing the examination results of the position of the cutting end part 72, the processing procedure of the spiral tooth 70 (tooth bottom part 74) by the lathe, i.e., the forming procedure of the worm 35 (procedure of cutting processing), will be described in detail with reference to FIG. 8.

### <Processing procedure of spiral tooth>

The reference sign C shown in FIG. 8 is the rotation center of a chuck (not shown) mounted on the main spindle of the lathe, and a workpiece W (round steel bar) serving as the rotating shaft 34 is set in the chuck. In other words, the rotation center C of the main spindle of the lathe and the chuck coincides with the rotation center of the rotating shaft 34 after the cutting processing is completed.

In addition, a lathe tool BT provided to be capable of approaching or moving away with respect to the workpiece W from the radial outer side thereof is disposed on the radial outer side of the workpiece W set in the chuck. The lathe tool BT is capable of moving in directions of the double-dot dashed line arrows M1 and M2 in FIG. 8, and is also capable of further moving in the axial direction (depth direction in FIG. 8) of the rotation center C. Accordingly, it becomes possible to form the spiral tooth 70 (tooth bottom part 74) on the outer circumferential part of the workpiece W along the axial direction thereof.

First, the lathe tool BT is abutted against the portion serving as the cutting start part 71 (see the black dot in FIG. 8), i.e., the portion of the first tapered part 35b (see FIG. 7) and indicated at 0 degrees in FIG. 8, and the workpiece W is rotated in the direction (clockwise direction) of an arrow RT. Then, the lathe tool BT is gradually moved in the direction of the double-dot dashed line arrow M1, and is gradually moved toward the axial base side (deep side in FIG. 8 and right side in FIG. 7) of the workpiece W. Accordingly, the tooth bottom part 74 (see FIG. 6) is formed to gradually deepen from the cutting start part 71 toward the radial inner side of the workpiece W. In addition, at a constant depth equal to the tooth height dimension of the spiral tooth 70, the tooth bottom part 74 is formed to advance in a spiral shape in the counterclockwise direction toward the axial base side of the workpiece W.

In other words, as indicated by the broken line arrow of cutting start in FIG. 8, the portion of the tooth bottom part 74 close to the cutting start part 71 is shallow, and the depth of the tooth bottom part 74 deepens as it extends away from the cutting start part 71. Afterward, the depth of the tooth bottom part 74 becomes a constant depth equal to the tooth height dimension of the spiral tooth 70. Accordingly, the spiral tooth 70 (tooth bottom part 74) is formed at a specific pitch (2.199 mm).

Subsequently, at the portion on the axial base side of the worm 35, specifically, near the second tapered part 35c (see FIG. 7), the lathe tool BT is gradually moved in the direction of the double-dot dashed line arrow M2. Accordingly, the depth of the tooth bottom part 74 subjected to cutting processing with the lathe tool BT gradually becomes shallower toward the cutting end part 72 (see the broken line arrow of cutting end in FIG. 8).

From the cutting start to the cutting end indicated by the broken line arrows, the lathe tool BT relatively rotates multiple times around the workpiece W. Accordingly, the spiral tooth 70 (tooth bottom part 74) is formed to advance in a spiral shape in the counterclockwise direction, and on the counterclockwise direction side (obtuse angle side), the position of the cutting end part 72 becomes 322 degrees. In contrast, with respect to the position of the cutting start part 71 at 0 degrees, on the clockwise direction side (acute angle side), the position of the cutting end part 72 becomes 38 degrees.

### <Examination of position of cutting end part with respect to position of cutting start part>

Next, a model of the rotating shaft 34 was created by a computer, and the optimal value of the position of the cutting end part 72 with respect to the position of the cutting start part 71 was simulated. Hereinafter, the examination results will be described in detail with reference to FIG. 9 to FIG. 14.

First, as shown in FIG. 9, the balance amount [g•mm] of the rotating shaft 34 was simulated by varying the position of the cutting end part 72 with respect to the position (0 degrees) of the cutting start part 71 in the clockwise direction (acute angle side) in <30-degree increments> within a range from 0 degrees to 180 degrees. As a result, the balance amount [g•mm] of the rotating shaft 34 exhibited the smallest value of 0.02255 [g•mm] at 30 degrees indicated by the circle mark.

Next, as shown in FIG. 10, resolution was enhanced, and the position of the cutting end part 72 at which the balance amount [g•mm] of the rotating shaft 34 becomes smaller was simulated in <5-degree increments>. As a result, in <5-degree increments>, the balance amount [g•mm] of the rotating shaft 34 exhibited the smallest value of 0.01390 [g•mm] at 40 degrees indicated by the circle mark.

In this manner, the balance amount [g•mm] of the rotating shaft 34 exhibited a minimum value of 0.02255 [g•mm] at 30 degrees in the case of <30-degree increments>, and the balance amount [g•mm] of the rotating shaft 34 exhibited a minimum value of 0.01390 [g•mm] at 40 degrees in the case of <5-degree increments>. There is an angle difference of 10 degrees between these two values, and neither can be said to be the accurate value. Thus, resolution was further enhanced to perform simulation in <1-degree increments>. As a result, as shown in FIG. 11, it has been found that the balance amount [g•mm] of the rotating shaft 34 becomes the smallest value of 0.01327 [g•mm] at 38 degrees, which is closer to 40 degrees.

However, in cutting processing with a lathe, depending on the configuration of the workpiece W (see FIG. 7), some errors may occur. That is, the position (acute angle side in the clockwise direction) of the cutting end part 72 with respect to the position (0 degrees) of the cutting start part 71 may not be consistent with high precision as intended. Thus, in this embodiment, a desirable range has been derived as the position of the cutting end part 72 for the configuration (see FIG. 7) of the workpiece W, and by performing cutting processing to keep the position within this range, good rotational balance can be obtained as the rotating shaft 34 applied to the sunroof motor 20.

Specifically, in this embodiment, as indicated by the range with hatching in FIG. 11, by configuring the position of the cutting end part 72 to a position at an acute angle within the range (angle range) of 37 degrees to 40 degrees, both indicated by circle marks, with respect to the position (0 degrees) of the cutting start part 71, the balance amount [g•mm] of the rotating shaft 34 became an optimal value sufficiently applicable to the sunroof motor 20. The balance amount [g•mm] of the rotating shaft 34 at this time exhibited 0.01390 [g•mm] or less.

Herein, several samples of the rotating shaft 34 were prepared for each position (each angle) of the cutting end part 72 to confirm whether these samples would exhibit the same tendency as the simulation. As a result, as shown by AVE in FIG. 12 and FIG. 13, in the case where the position of the cutting end part 72 was 35 degrees, the static value [g•mm] became the smallest (n = 32, see the part with hatching).

However, as shown in FIG. 14, when looking at the balance amount [g•mm] (dynamic unbalance: right/left) of the rotating shaft 34, similar to the simulation, the case where the position of the cutting end part 72 was 38 degrees exhibited a smaller value than the case of 35 degrees (n = 30, see the part with hatching).

Thus, in the sunroof motor 20, since vibration and noise generated during operation become a problem, 38 degrees, which exhibits a smaller value of dynamic unbalance, is adopted as the optimal position of the cutting end part 72, and in this embodiment, this 38 degrees is configured as an approximate center value in the range (optimal angle range) of 37 degrees to 40 degrees.

The "analytic value" of the broken line in FIG. 12 indicates the simulation result by a computer.

As described in detail above, according to this embodiment, the cutting start part 71 forming one end part of the tooth bottom part 74 is provided at the first tapered part 35b, the cutting end part 72 forming the other end part of the tooth bottom part 74 is provided at the second tapered part 35c, the tooth bottom part 74 extends to advance in a spiral shape from the cutting start part 71 toward one circumferential side (counterclockwise direction) of the worm 35, and the position of the cutting end part 72 is configured within an angle range (position of 38 degrees) of less than 90 degrees on the other circumferential side (clockwise direction) of the worm 35 with respect to the position of the cutting start part 71, centered on the rotation center (equal to the rotation center C of the rotating shaft 34) of the worm 35.

Accordingly, it is possible to obtain good overall rotational balance of the rotating shaft 34 having the worm 35. Thus, even with the rotor 33 (see FIG. 5) having one adjustment member 38 on only one side of the rotor core 33a and the magnets MG, the static unbalance and the dynamic unbalance, when viewed comprehensively, can be configured as good rotational balance. Accordingly, it becomes possible to realize an electric motor part 30 (sunroof motor 20) with improved quietness.

In addition, it becomes possible to design the spiral tooth 70 based on only one adjustment element, i.e., the shift value (offset value) of the position of the cutting end part 72 with respect to the position of the cutting start part 71. Thus, the manufacturing process of the rotating shaft 34 including the worm 35 can be simplified, and time-related costs can be reduced.

In addition, according to this embodiment, the bearing support part 34d having a smaller diameter than the main body part 35a is provided on the side opposite to the main body part 35a side of the first tapered part 35b in the axial direction of the worm 35, and the small-diameter cylindrical part 34b having a smaller diameter than the main body part 35a is provided on the side opposite to the main body part 35a side of the second tapered part 35c in the axial direction of the worm 35.

Accordingly, both axial sides of the worm 35 can function as "relief" for the lathe tool BT, and thus it becomes possible to form the tooth bottom part 74 (spiral tooth 70) with high accuracy from the first tapered part 35b (incomplete part) via the main body part 35a over to the second tapered part 35c (incomplete part). Thus, it becomes possible to operate the reduction mechanism SD more smoothly while enhancing the transmission efficiency of the gears forming the reduction mechanism SD.

Furthermore, according to this embodiment, since the manufacturing process of the rotating shaft 34 including the worm 35 can be simplified, it becomes possible to achieve energy conservation in manufacturing. Accordingly, it is possible to realize Goal 7 (Ensure access to affordable, reliable, sustainable and modern energy for all) and Goal 13 (Take urgent action to combat climate change and its impacts), in particular, among the Sustainable Development Goals (SDGs) established by the United Nations.

In the above embodiment, the invention has been shown to be applied to the worm 35 of the sunroof motor 20, but the invention is not limited thereto, and may also be applied to a worm of a motor device used as a driving source for slide door devices, power window devices, wiper devices, etc. mounted on vehicles, for example.

In addition, the materials, shapes, dimensions, quantities, installation sites, etc. of the constituent elements in the above embodiment may be configured in any manner and are not limited to the above embodiment as long as the present invention can be achieved.

### [Reference Signs List]

10: sunroof device, 11: roof panel, 12: vehicle, 13: roof, 14: opening, 15a, 15b: shoe, 16: guide rail, 17a, 17b: drive cable, 20: sunroof motor, 30: electric motor part, 31: motor case, 31a: sidewall part, 31b: bottom wall part, 32: stator, 32a: stator core, 32b: teeth, 32c: insulator, 33: rotor, 33a: rotor core, 33b: magnet holder, 34: rotating shaft, 34a: rotating shaft main body, 34b: small-diameter cylindrical part (second small-diameter part), 34c: tapered connection part, 34d: bearing support part (first small-diameter part), 35: worm, 35a: main body part, 35b: first tapered part, 35c: second tapered part, 36: ball bearing, 36a: inner race, 36b: outer race, 36c: ball, 37: sensor magnet unit, 37a: bracket member, 37b: sensor magnet, 38: adjustment member, 39: holder member, 39a: support main body, 39b: wall part, 39c: annular support part, 40: reduction mechanism part, 41: gear case, 42: first wall part, 43: second wall part, 44: third wall part, 45: worm wheel accommodating part, 46: worm wheel (gear), 46a: tooth part, 47: output shaft, 47a: output gear, 48: cover member, 49: worm accommodating part, 49a: conductive member support part, 50: bearing mounting part, 51: motor accommodating part, 60: metal jacket, 70: spiral tooth, 71: cutting start part (first tooth bottom end part, starting point), 72: cutting end part (second tooth bottom end part, ending point), 73: tooth tip part, 74: tooth bottom part, AG: air gap, BR1: first bearing, BR2: second bearing, BT: lathe tool, CL: coil, EP: conductive member, FG: front glass, MC: meshing center, MG: magnet, SC: fixing screw, SD: reduction mechanism, W: workpiece

## Claims

1. A worm (35) with which a gear (46) is meshed, the worm (35) comprising:
a main body part (35a);
a first tapered part (35b) connected to one axial side of the main body part (35a);
a second tapered part (35c) connected to another axial side of the main body part (35a);
a spiral tooth (70) provided in a spiral shape on outer circumferential parts of the first tapered part (35b), the main body part (35a), and the second tapered part (35c), and comprising a tooth tip part (73) and a tooth bottom part (74);
a first tooth bottom end part (71) provided at the first tapered part (35b) and forming one end part of the tooth bottom part (74); and
a second tooth bottom end part (72) provided at the second tapered part (35c) and forming another end part of the tooth bottom part (74),
the worm (35) being **characterized in that**:
the first tapered part (35b) has a tapered shape that gradually becomes smaller in diameter as it extends away from the main body part (35a),
the second tapered part (35c) has a tapered shape that gradually becomes smaller in diameter as it extends away from the main body part (35a),
an outer diameter (D2) of the worm (35) as defined by the tooth tip part (73) has a constant dimension, and
the tooth bottom part (74) extends to advance in a spiral shape from the first tooth bottom end part (71) toward one circumferential side of the worm (35), and a position of the second tooth bottom end part (72) on the second tapered part (35c) is configured within an angle range of less than 90 degrees on another circumferential side of the worm (35) with respect to a position of the first tooth bottom end part (71) on the first tapered part (35b), centered on a rotation center of the worm (35).

2. The worm (35) as claimed in claim 1, wherein
the angle range is a range of 37 degrees to 40 degrees.

3. The worm (35) as claimed in claim 1 or claim 2, wherein
a first small-diameter part (34d) having a diameter smaller than the main body part (35a) is provided on a side of the first tapered part (35b) opposite to the main body part (35a) side in an axial direction of the worm (35), and
a second small-diameter part (34b) having a diameter smaller than the main body part (35a) is provided on a side of the second tapered part (35c) opposite to the main body part (35a) side in the axial direction of the worm (35).

4. The worm (35) as claimed in claim 3, wherein
the worm (35) is a machined product.

## Patentansprüche

1. Schnecke (35), mit der ein Zahnrad (46) in Eingriff steht, wobei die Schnecke (35) umfasst:
ein Hauptkörperteil (35a);
ein erstes verjüngtes Teil (35b), das mit einer axialen Seite des Hauptkörperteils (35a) verbunden ist;
ein zweites verjüngtes Teil (35c), das mit einer anderen axialen Seite des Hauptkörperteils (35a) verbunden ist;
einen Spiralzahn (70), der in einer Spiralform auf äußeren Umfangsteilen des ersten verjüngten Teils (35b), des Hauptkörperteils (35a) und des zweiten verjüngten Teils (35c) bereitgestellt ist und ein Zahnspitzenteil (73) und ein Zahnbodenteil (74) umfasst;
ein erstes Zahnbodenendteil (71), das an dem ersten verjüngten Teil (35b) bereitgestellt ist und ein Endteil des Zahnbodenteils (74) bildet; und
ein zweites Zahnbodenendteil (72), das an dem zweiten verjüngten Teil (35c) bereitgestellt ist und ein weiteres Endteil des Zahnbodenteils (74) bildet,
wobei die Schnecke (35) **dadurch gekennzeichnet ist, dass**:
das erste verjüngte Teil (35b) eine verjüngte Form aufweist, deren Durchmesser allmählich kleiner wird, wenn sie sich von dem Hauptkörperteil (35a) weg erstreckt,
das zweite verjüngte Teil (35c) eine verjüngte Form aufweist, die im Durchmesser allmählich kleiner wird, wenn sie sich von dem Hauptkörperteil (35a) weg erstreckt,
ein Außendurchmesser (D2) der Schnecke (35), wie er durch das Zahnspitzenteil (73) definiert ist, eine konstante Abmessung hat, und
das Zahnbodenteil (74) sich erstreckt, um in einer Spiralform von dem ersten Zahnbodenendteil (71) zu einer Umfangsseite der Schnecke (35) vorzurücken, und eine Position des zweiten Zahnbodenendteils (72) auf dem zweiten verjüngten Teil (35c) innerhalb eines Winkelbereichs von weniger als 90 Grad auf einer anderen Umfangsseite der Schnecke (35) in Bezug auf eine Position des ersten Zahnbodenendteils (71) auf dem ersten verjüngten Teil (35b) konfiguriert ist, zentriert auf ein Rotationszentrum der Schnecke (35).

2. Schnecke (35) gemäß Anspruch 1, wobei
der Winkelbereich ein Bereich von 37 Grad bis 40 Grad ist.

3. Schnecke (35) gemäß Anspruch 1 oder Anspruch 2, wobei
ein erstes Teil (34d) mit kleinem Durchmesser, dessen Durchmesser kleiner ist als der des Hauptkörperteils (35a), auf einer Seite des ersten verjüngten Teils (35b) bereitgestellt ist, die der Seite des Hauptkörperteils (35a) in einer axialen Richtung der Schnecke (35) gegenüberliegt, und
ein zweites Teil (34b) mit kleinem Durchmesser, dessen Durchmesser kleiner ist als der des Hauptkörperteils (35a), auf einer Seite des zweiten verjüngten Teils (35c) bereitgestellt ist, die der Seite des Hauptkörperteils (35a) in der axialen Richtung der Schnecke (35) gegenüberliegt.

4. Schnecke (35) gemäß Anspruch 3, wobei
die Schnecke (35) ein maschinell bearbeitetes Produkt ist.

## Revendications

1. Une vis sans fin (35), avec laquelle une roue dentée (46) est en prise, la vis sans fin (35) comprenant :
une partie de corps principal (35a) ;
une première partie conique (35b), reliée à un côté axial de la partie de corps principal (35a) ;
une deuxième partie conique (35c), reliée à un autre côté axial de la partie de corps principal (35a) ;
une dent hélicoïdale (70), prévue selon une forme hélicoïdale sur les parties circonférentielles extérieures de la première partie conique (35b), de la partie de corps principal (35a) et de la deuxième partie conique (35c), et comprenant une partie (73) de sommet de dent et une partie inférieure (74) de dent ;
une première partie d'extrémité inférieure (71) de dent, prévue au niveau de la première partie conique (35b) et formant une partie d'extrémité de la partie inférieure (74) de dent ; et
une deuxième partie d'extrémité inférieure (72) de dent, prévue au niveau de la deuxième partie conique (35c) et formant une autre partie d'extrémité de la partie inférieure (74) de dent,
la vis sans fin (35) étant **caractérisée en ce que** :
la première partie conique (35b) présente une forme conique dont le diamètre diminue progressivement à mesure que l'on s'éloigne de la partie de corps principal (35a),
la deuxième partie conique (35c) présente une forme conique dont le diamètre diminue progressivement à mesure que l'on s'éloigne de la partie de corps principal (35a),
un diamètre extérieur (D2) de la vis sans fin (35), tel que défini par la partie (73) de sommet de dent, a une dimension constante, et
la partie inférieure (74) de dent s'étend de manière à avancer selon une forme de spirale depuis la première partie d'extrémité inférieure (71) de dent vers un côté circonférentiel de la vis sans fin (35), et la position de la deuxième partie d'extrémité inférieure (72) de dent sur la deuxième partie conique (35c) est configurée dans une gamme d'angles inférieure à 90 degrés sur un autre côté circonférentiel de la vis sans fin (35) par rapport à la position de la première partie d'extrémité inférieure (71) de dent sur la première partie conique (35b), centrée sur un centre de rotation de la vis sans fin (35).

2. La vis sans fin (35) selon la revendication 1, dans laquelle
la gamme d'angles est comprise entre 37 degrés et 40 degrés.

3. La vis sans fin (35) selon la revendication 1 ou la revendication 2, dans laquelle
une première partie de petit diamètre (34d) ayant un diamètre inférieur à celui de la partie de corps principal (35a) est prévue sur un côté de la première partie conique (35b) opposé au côté de la partie de corps principal (35a) dans une direction axiale de la vis sans fin (35), et
une deuxième partie de petit diamètre (34b) ayant un diamètre inférieur à celui de la partie de corps principal (35a) est prévue sur un côté de la deuxième partie conique (35c) opposé au côté de la partie de corps principal (35a) dans la direction axiale de la vis sans fin (35).

4. La vis sans fin (35) selon la revendication 3, dans laquelle
la vis sans fin (35) est un produit usiné.
